# FASCICULE DE BREVET EUROPEEN

(11) **EP 1 734 851 B1**
(45) Date de publication et mention de la délivrance du brevet: **09.04.2008**
(21) Numéro de dépôt: 05744321.0
(22) Date de dépôt: 29.03.2005
(51) Int. Cl.: A47J 41/00

(54) **APPAREIL ELECTRIQUE DE CHAUFFAGE DE LIQUIDE**
ELEKTRISCHER WASSERKESSEL
ELECTRICAL WATER HEATER

(30) Priorité: 07.04.2004 FR 0403661
(43) Date de publication de la demande: 27.12.2006
(73) Titulaire: SEB SA, 69130 Ecully (FR)
(72) Inventeur: LABELLE, Guy, F-72610 Champfleur (FR); BINOT, Jean-Pierre, F-72130 St Ouen De Mimbre (FR)
(74) Mandataire: Kiehl, Hubert
(86) Numéro de dépôt international: PCT/FR2005/000759
(87) Numéro de publication internationale: WO 2005/099538

(56) Documents cités:
- EP-A- 0 549 953
- WO-A-00/34143
- DE-U- 8 411 995

## Description

La présente invention se rapporte à un appareil électrique de chauffage de liquide, tel que par exemple une bouilloire électrique. Plus particulièrement, l'invention concerne un appareil électrique de chauffage de liquide comprenant un boîtier qui définit une enceinte destinée à contenir un liquide, une ouverture supérieure de remplissage de l'enceinte, qui est délimitée par un pourtour, des moyens électriques de chauffage du liquide, un organe verseur communiquant avec l'enceinte et s'étendant à proximité de l'ouverture, un couvercle adapté pour obturer ladite ouverture, une languette mobile par rapport au couvercle entre une position sortie dans-laquelle elle obture l'organe verseur et une position de versage dans laquelle elle est au moins en partie rétractée dans le couvercle, et une commande de versage reliée à la languette par un mécanisme d'actionnement adapté à placer ladite languette soit en position sortie lorsque la commande de versage est inactive, soit en position de versage lorsque la commande de versage est activée.

Le document FR-A-2 756 476 décrit une bouilloire électrique de ce type, c'est-à-dire qui comporte une languette normalement rappelée en position sortie de manière à obturer l'organe verseur et qui peut être plus ou moins rétractée en pressant un bouton de commande monté mobile sur le couvercle. Le principal avantage de la bouilloire décrite dans ce document est que l'ensemble du mécanisme d'actionnement reliant le bouton de commande à la languette est logé dans le couvercle, ce qui le protège des salissures et permet de libérer complètement l'ouverture de remplissage lorsque le couvercle est enlevé.

Par ailleurs, il existe des bouilloires avec des moyens d'obturation mobiles dans l'organe verseur, qui sont reliés par une tringlerie traversant l'enceinte de la bouilloire jusqu'à un bouton d'actionnement monté mobile sur le boîtier de manière opposée à l'organe verseur. Mais la présence d'une telle tringlerie gêne considérablement le remplissage et le nettoyage de la bouilloire. De plus, la tringlerie est susceptible de s'encrasser ou de s'oxyder à l'usage.

Il convient de souligner que, comme décrit dans le document FR-A-2 756 476, le montage du bouton formant la commande de versage sur le couvercle impose un positionnement de la commande de versage au sommet de la bouilloire. Un tel positionnement de la commande de versage nécessite une poignée permettant une prise en main à proximité du couvercle pour pouvoir actionner celle-ci tout en inclinant la bouilloire, ce qui rend le geste de versage moins naturel de l'avis de certains consommateurs. De plus, l'actionnement de la commande de versage avec le pouce est moins intuitif et diminue la fermeté de la prise en main de la poignée pour certains utilisateurs.

La présente invention a pour but de pallier ces inconvénients en proposant un appareil électrique de chauffage de liquide dans lequel l'actionnement de la commande de versage soit confortable et sûr pour la plupart des utilisateurs, tout en conservant l'avantage d'un mécanisme protégé des salissures qui ne gêne pas le remplissage de la bouilloire.

A cet effet, la présente invention a pour objet un appareil du type précité, caractérisé en ce que le mécanisme d'actionnement reliant la commande de versage à la languette comprend un premier mécanisme agencé dans le boîtier et présentant une première extrémité reliée à la commande de versage et une deuxième extrémité mobile à travers une fenêtre du pourtour de l'ouverture, et un deuxième mécanisme agencé dans le couvercle et présentant une première extrémité mobile à travers une fenêtre dudit couvercle et une deuxième extrémité reliée à la languette, la fenêtre du pourtour et la fenêtre du couvercle étant agencées pour venir en correspondance lorsque le couvercle obture l'ouverture, et la deuxième extrémité du premier mécanisme étant adaptée à coopérer avec la première extrémité du deuxième mécanisme, de manière à ce que l'actionnement de la commande de versage soit transmis à la languette via les premier et deuxième mécanismes, ledit deuxième mécanisme étant adapté à créer un déplacement amplifié de la languette par rapport au déplacement de sa première extrémité.

Ainsi, en prévoyant deux mécanismes distincts qui viennent coopérer ensemble lors de la fermeture du couvercle, on a la possibilité de monter la commande de versage en tout endroit approprié du boîtier, et notamment mais non nécessairement sous la poignée de l'appareil, tout en conservant les avantages d'un mécanisme d'actionnement protégé et d'une ouverture de remplissage entièrement dégagée.

Dans des formes de réalisation préférées de l'invention, on a recours, en outre, à l'une et/ou à l'autre des dispositions suivantes :
- la deuxième extrémité du premier mécanisme est montée coulissante selon une direction donnée et vient en butée contre la première extrémité du deuxième mécanisme, qui est mobile à l'encontre de la force de rappel d'un organe élastique selon une direction sensiblement colinéaire à ladite direction donnée, de sorte que la coopération entre les premier et deuxième mécanismes est réalisée par simple contact ;
- la première extrémité du deuxième mécanisme fait saillie à travers la fenêtre du couvercle et pénètre dans la fenêtre du pourtour, lorsque la commande de versage est inactive, de manière à former un moyen de verrouillage du couvercle sur la bouilloire ;
- la deuxième extrémité du premier mécanisme présente une course suffisante pour faire saillie de la fenêtre du pourtour et pénétrer dans la fenêtre du couvercle lorsque la commande de versage est activée, en maintenant ainsi le verrouillage du couvercle sur le boîtier ;
- le boîtier présente une lumière qui débouche dans l'organe verseur et dans laquelle s'étend la languette du couvercle lorsque celui-ci obture l'ouverture, lesdits premier et deuxième mécanismes étant adaptés pour qu'au moins une partie de ladite languette s'étende dans ladite lumière lorsque la commande de versage est activée ; ainsi, la languette en position de versage forme toujours un moyen de retenue du couvercle sur la bouilloire ;
- le deuxième mécanisme comprend un levier monté pivotant autour d'un axe sensiblement parallèle à la normale de l'ouverture, et présentant une première extrémité formant la première extrémité dudit mécanisme et une deuxième extrémité munie d'une denture, ladite première extrémité étant sollicitée radialement vers l'extérieur par un organe élastique ;
- le deuxième mécanisme comprend un organe pivotant muni d'un premier secteur denté qui engrène une denture linéaire reliée à la languette et un deuxième secteur denté qui engrène la denture de la deuxième extrémité du levier pivotant, ledit premier secteur denté présentant un rayon supérieur au rayon dudit deuxième secteur denté ;
- le premier mécanisme comprend un levier monté basculant par rapport au boîtier autour d'un axe et présentant une première extrémité liée à la commande de versage et une deuxième extrémité en appui contre une première extrémité d'un piston, ledit piston étant monté coulissant dans ledit boîtier à l'encontre d'un organe élastique et présentant une deuxième extrémité qui forme la deuxième extrémité dudit premier mécanisme;
- le boîtier comprend une poignée située du côté opposé à l'organe verseur, et la commande de versage se présente sous la forme d'une gâchette agencée sous ladite poignée.

D'autres caractéristiques et avantages de l'invention apparaîtront au cours de la description qui va suivre, donnée à titre d'exemple non limitatif, en référence aux dessins annexés dans lesquels :
- la figure 1 est une vue en perspective éclatée des principaux éléments d'une bouilloire réalisée selon l'invention qui comprend un organe verseur obturable et une poignée ;
- la figure 2 est une vue partielle en coupe longitudinale dans le plan de la poignée de la bouilloire représentée à la figure 1 ;
- la figure 3 est une vue de dessous en perspective d'un élément du couvercle ;
- la figure 4 est une vue en perspective partielle de la bouilloire avec l'organe verseur obturé ;
- la figure 5 est une vue de dessus arrachée et simplifiée de la figure 4 ;
- la figure 6 est une vue analogue à la figure 4, dans laquelle l'organe verseur est dégagé ;
- la figure 7 est une vue analogue à la figure 5, dans laquelle l'organe verseur est dégagé.

Sur les différentes figures, on a conservé les mêmes références pour désigner des éléments identiques ou similaires.

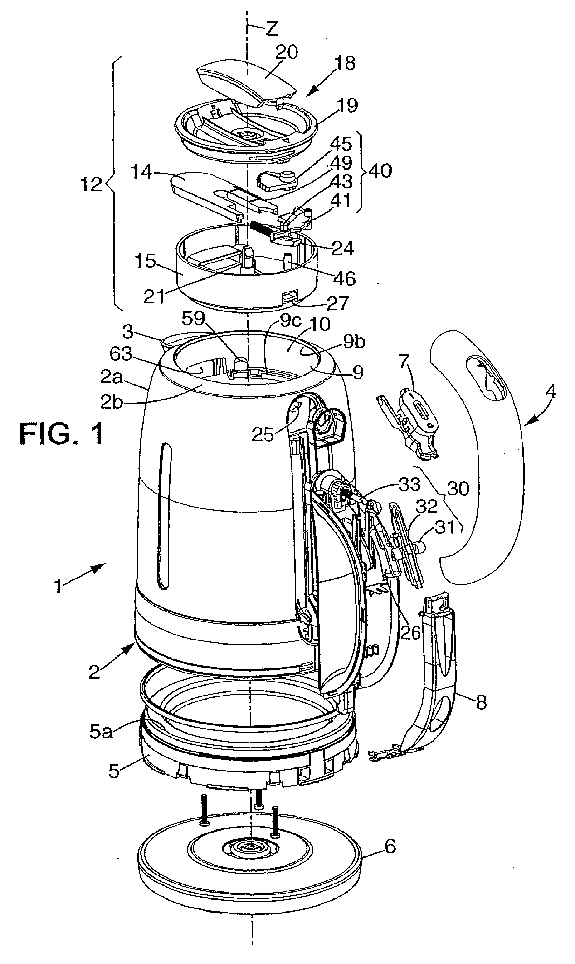

La bouilloire électrique 1 représentée à la figure 1 comprend un boîtier 2 dont le corps 2a définit une enceinte sensiblement cylindrique centrée sur un axe vertical Z. Le boîtier 2 comprend également un organe verseur 3, une poignée 4 et un fond 5.

Le fond 5 comporte une plaque métallique 5a délimitant le fond de l'enceinte qui est en contact avec une résistance électrique, non visible, de manière à chauffer l'eau ou tout autre liquide contenu dans l'enceinte.

Le fond 5 de la bouilloire est destiné à reposer sur une base 6 munie en son centre d'une fiche électrique. Le fond 5 comprend de manière connue une prise adaptée pour établir une connexion électrique avec la fiche de la base 6 quelle que soit l'orientation de la bouilloire reposant sur la base. L'intérieur du fond 5 comprend, en plus de la résistance électrique, un interrupteur pour établir une connexion entre la prise et la résistance électrique. Le fonctionnement de la bouilloire est commandé par un bouton marche/arrêt 7 agencé sur la poignée 4 et relié à l'interrupteur par un levier 8.

Le boîtier 2 présente dans sa partie supérieure un pourtour 9 qui définit une ouverture 10. Cette ouverture 10 présente une surface relativement étendue de manière à permettre un remplissage aisé de l'enceinte. Le pourtour 9 est formé par une paroi annulaire du boîtier qui présente une portion verticale cylindrique 9b coaxiale à l'axe Z et une collerette 9c s'étendant radialement vers l'axe central Z depuis le bas de la portion verticale. La surface de l'ouverture ainsi définie par le pourtour 9 présente une direction normale colinéaire à l'axe central Z. Toutefois, l'enceinte et l'ouverture 10 pourraient présenter des configurations autres que cylindriques ou présenter des axes symétriques qui ne seraient pas colinéaires.

La bouilloire comprend également un couvercle amovible 12 adapté à obturer l'ouverture 10, qui a ici la forme d'un cylindre de faible hauteur, de manière à coopérer avec le pourtour 9 de l'ouverture. Mais le couvercle pourrait présenter une forme différente, notamment dans le cas où le pourtour de l'ouverture serait une face globalement plane s'étendant essentiellement dans un plan transversal à l'axe central Z.

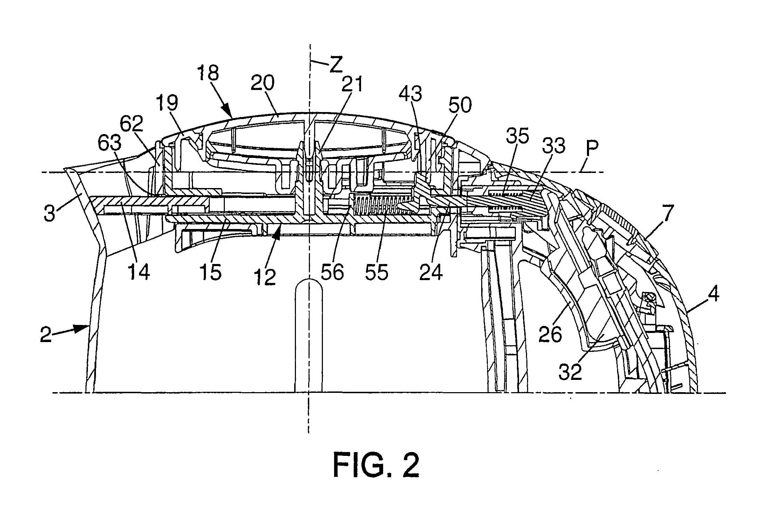

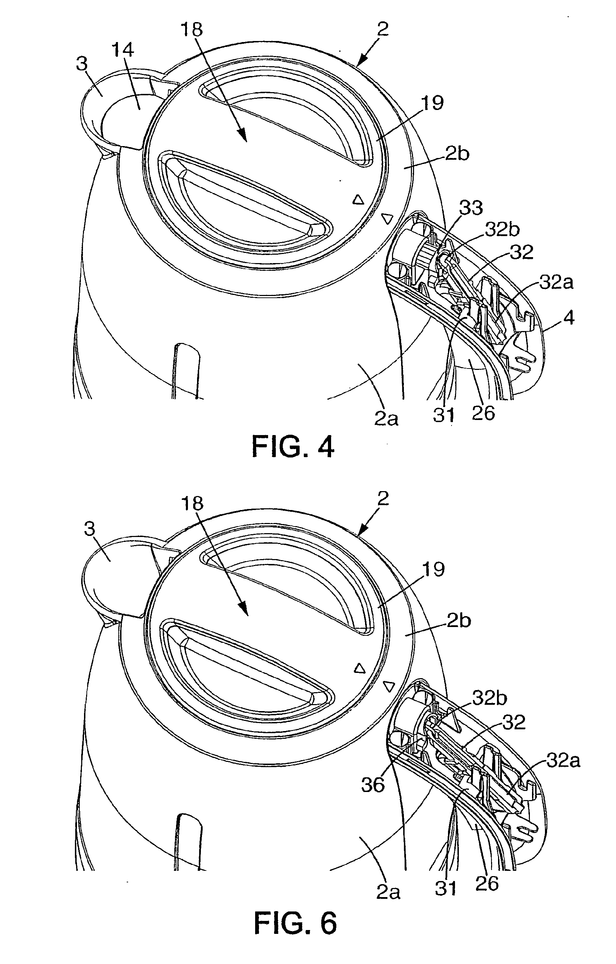

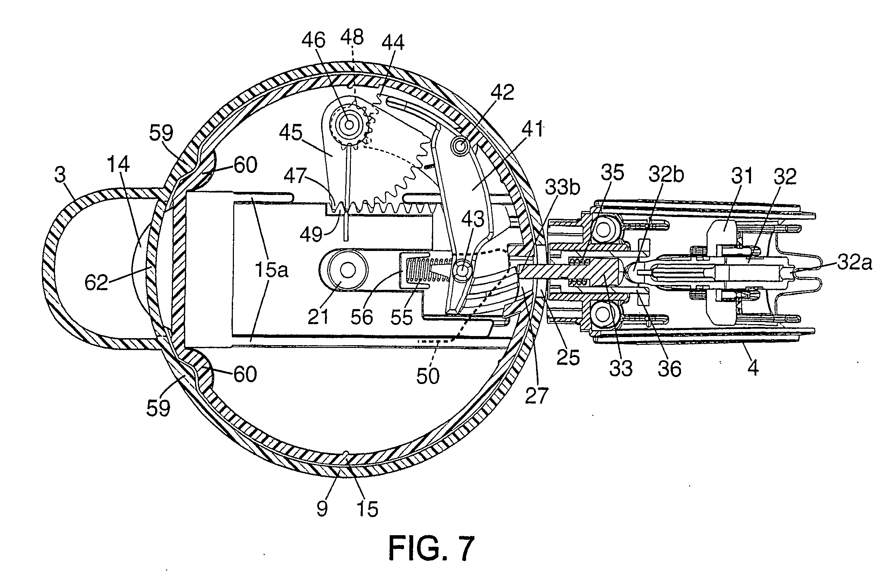

Le couvercle 12 comporte une languette 14 montée mobile sur celui-ci entre une position sortie, visible aux figures 2, 4 et 5, dans laquelle elle s'étend en dehors du couvercle 12 de manière à obturer l'organe verseur 3, et une position de versage, visible aux figures 6 et 7, dans laquelle elle est rétractée dans le couvercle. L'obturation réalisée par la languette n'est pas complètement étanche, mais permet d'éviter des projections importantes de liquide dans le cas où la bouilloire est renversée.

Bien entendu, l'organe verseur 3 doit s'étendre au moins en partie à proximité de l'ouverture 10 de manière à ce que la languette 14 liée au couvercle 12 ne s'étende pas sur une distance trop importante entre l'ouverture et l'organe verseur, et conserve une forme relativement simple. Toutefois, l'organe verseur 3 pourrait présenter une forme plus saillante par rapport au corps 2a du boîtier.

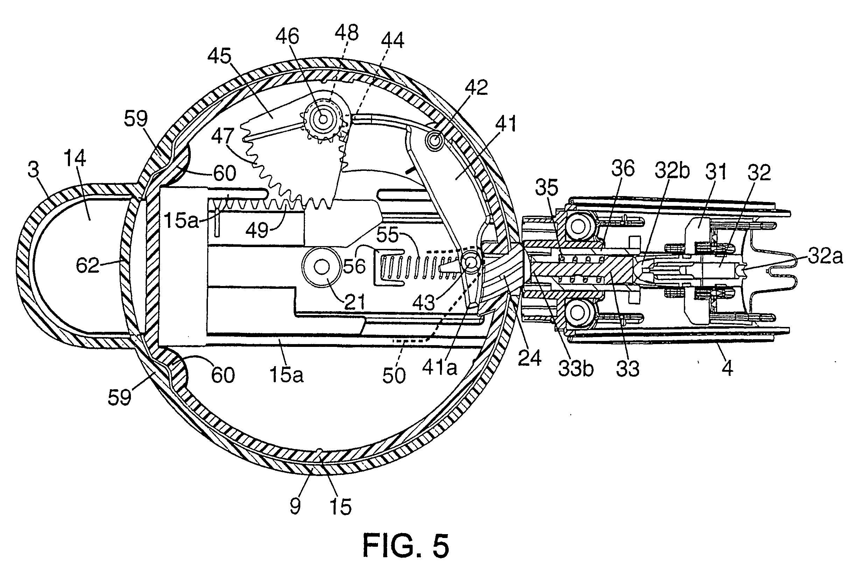

Dans le mode de réalisation représenté, le mouvement de la languette 14 est guidé à l'intérieur d'une pièce en forme de cuvette 15 qui forme le fond du couvercle 12. Ce fond 15 présente sur sa face inférieure deux nervures 15a (figures 5 et 7) qui guident la languette 14 selon une direction radiale par rapport à l'axe central Z à travers une ouverture formée dans le fond 15.

Le couvercle 12 est équipé en outre d'une commande de verrouillage 18 qui comprend un premier élément 19 formant la face supérieure circulaire du couvercle et un organe de préhension 20 assemblé à la face supérieure par encliquetage.

La commande de verrouillage 18 est montée en rotation autour d'un axe 21 solidaire du fond du couvercle et s'étendant selon l'axe central Z. La commande de verrouillage 18 tourne sous un angle d'environ 30°, par exemple dans le sens horaire, entre deux positions, respectivement dites déverrouillée et verrouillée, qui sont repérables par des marquages en forme de flèche réalisés sur la face supérieure 19 du couvercle et sur le bord supérieur 2b du boîtier, au niveau de la poignée 4.

Le couvercle 12 comprend de plus un ergot 24 mobile entre une position rétractée et une position sortie dans laquelle il traverse une fenêtre 27 du couvercle pour venir coopérer avec une fenêtre 25 traversant le pourtour 9 de l'ouverture. L'ergot 24 forme un premier verrou qui vient en prise avec un élément de retenue du boîtier formé par la fenêtre 25, empêchant ainsi le retrait du couvercle 12 de la bouilloire.

La poignée 4 de la bouilloire, en forme d'anse mais qui pourrait être ouverte, présente sur sa face en regard du corps 2a une ouverture à travers laquelle est montée mobile une commande de versage, telle qu'une gâchette 26. La gâchette 26, ainsi placée sous la poignée, est reliée par un premier mécanisme 30, dit mécanisme de gâchette, pour réaliser une commande de versage. La gâchette 26 permet à l'utilisateur de rétracter plus ou moins la languette 14 dans le couvercle 12 de manière à libérer le passage de l'organe verseur 3 lorsqu'il veut verser le liquide contenu dans la bouilloire, comme cela sera détaillé ci-après.

La commande de verrouillage 18 est reliée à la languette 14 et à l'ergot 24 par un deuxième mécanisme 40, dit mécanisme de verrouillage, qui sera détaillé ci-après. La commande de verrouillage 18 est stable dans chacune des positions verrouillée / déverrouillée. Cette stabilité peut être obtenue par le frottement de la face supérieure 19 contre le bord supérieur du fond 15, mais aussi grâce au mécanisme de verrouillage 40. On notera que cette stabilité peut être obtenue différemment, notamment si la commande de verrouillage n'est pas rotative, mais coulissante le long d'un chemin de came qui pourrait alors comporter des moyens de blocage de la commande en position déverrouillée.

Le premier mécanisme 30, dit de gâchette, comprend un levier 32 monté basculant autour d'un axe 31 supporté par la structure interne de la poignée 4. Le levier 32 présente une première extrémité 32a solidaire de la gâchette 26.

Le mécanisme de gâchette 30 comprend également un piston 33 monté coulissant selon une direction radiale, qui présente une première extrémité contre laquelle appuie une deuxième extrémité 32b du levier basculant 32. Le piston 33 coulisse dans une pièce tubulaire 36 dans laquelle est disposé un ressort 35 qui prend appui à la fois sur cette pièce tubulaire et sur le piston 33, afin de rappeler la gâchette 26 en position inactive par l'intermédiaire du levier 32. Mais le rappel de la gâchette pourrait être réalisé autrement, par exemple avec un ressort hélicoïdal de torsion entourant l'axe 31.

Dans le mode de réalisation représenté, la pièce tubulaire 36 coulisse également par rapport au boîtier selon la direction radiale, mais le piston 33 pourrait être monté coulissant directement dans un logement du boîtier.

Le piston 33 présente une deuxième extrémité 33b qui coulisse à travers la fenêtre 25 du pourtour de l'ouverture entre une position rétractée, visible à la figure 5, lorsque la gâchette 26 est en position inactive, et une position saillante, visible à la figure 7, lorsque la gâchette 26 est activée, c'est-à-dire pressée par l'index de l'utilisateur. La deuxième extrémité 33b est une face plane qui coopère avec l'extrémité de l'ergot 24 par simple contact.

Le deuxième mécanisme 40, dit mécanisme de verrouillage, relie la commande de verrouillage 18 à la languette 14. Le mécanisme de verrouillage 40 comprend un levier pivotant 41 autour d'un axe 42 parallèle à l'axe central Z. A proximité d'une première extrémité 41a du levier pivotant 41 est agencé l'ergot 24 et une came 43 en forme de pion cylindrique vertical. L'ergot 24 s'étend en arc de cercle dans le plan moyen de l'ouverture et selon une direction globalement radiale par rapport à l'axe central Z. Le levier pivotant 41 présente à une deuxième extrémité une denture 44 en arc de cercle.

Le mécanisme de verrouillage 40 comprend également un organe pivotant 45 autour d'un axe 46 qui est aussi parallèle par rapport à l'axe central Z. L'organe pivotant 45 comporte un premier secteur denté 47 de rayon relativement important et un deuxième secteur denté 48 coaxial au premier, mais de rayon nettement inférieur. Le deuxième secteur denté 48 engrène la denture 44 du levier pivotant 41, de sorte le pivotement du levier 41 entraîne un pivotement en sens contraire de l'organe 45. Du fait que la denture 44 du levier 41 présente un rayon, mesuré par rapport à l'axe 42, supérieur au rayon du deuxième secteur denté 48, le pivotement en sens contraire de l'organe 45 est amplifié par rapport au pivotement du levier 41.

Le premier secteur denté 47 de l'organe pivotant 45 engrène une denture linéaire 49 formée sur une patte qui s'étend dans le prolongement de l'extrémité postérieure de la languette 14. Dans le présent mode de réalisation, la denture linéaire 49 est intégralement formée avec la languette 14 et est donc solidaire de celle-ci. Toutefois, il est envisageable de prévoir un certain jeu ou un moyen élastique entre la denture linéaire et la languette, par exemple pour que la languette vienne en appui plus ou moins étanche contre la paroi intérieure de l'organe verseur 3.

L'engrènement du premier secteur denté 47 avec la denture linéaire 49 permet de transformer le mouvement de pivotement de l'organe 45 en un mouvement de translation horizontale de la languette 14, laquelle translation est encore amplifiée par rapport à l'amplitude du déplacement de la première extrémité 41a du levier pivotant 41 par la différence des rayons existant entre les premier et deuxième secteurs dentés (47, 48). A titre indicatif, on obtient un déplacement de 27 mm de la languette 14 pour un déplacement radial de l'extrémité de l'ergot 24 d'environ 4 mm.

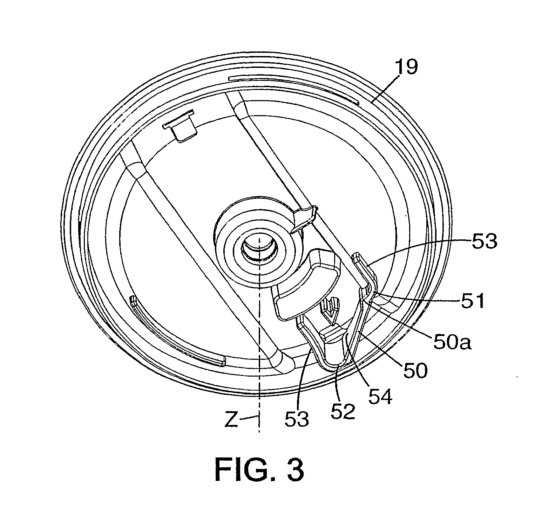

Comme on le voit mieux sur la figure 3, le côté intérieur de la face supérieure 19, qui forme la commande de verrouillage 18, comporte un guide de came 50 qui s'étend selon l'axe central Z à partir du côté intérieur et selon une corde de la face supérieure circulaire 19 entre une première extrémité 51 et une deuxième extrémité 52. Les extrémités 51 et 52 sont prolongées par des pattes 53 qui s'étendent parallèlement au diamètre de la face circulaire. La première extrémité 51 est située à une distance de l'axe de pivotement confondu avec l'axe central Z, qui est inférieure à la distance de la deuxième extrémité 52 à cet axe de pivotement.

En position verrouillée de la commande 18, la came 43 est en appui contre la deuxième extrémité 52 du guide 50, la première extrémité 41a du levier 41 est proche de la périphérie du boîtier, et par conséquent, l'ergot 24 et la languette 14 sont en position sortie, comme cela est mieux visible sur la figure 5.

Le guide de came 50 (figure 3) se présente sous la forme d'une aile avec une face latérale 54 orientée vers l'axe central Z contre laquelle la came 43 du levier pivotant 41 vient en appui. L'appui de la came 43 est obtenu grâce à un ressort de compression hélicoïdal 55 disposé entre une butée 56 solidaire du fond 15 du couvercle 12 et la première extrémité 41a du levier pivotant 41. Du fait de l'élasticité de l'appui de la came 43 contre le guide de came 50, il est possible d'écarter celle-ci du guide de came 50 pour rétracter plus ou moins la languette 14 dans le couvercle, la commande de verrouillage 18 demeurant en position verrouillée.

La face latérale 54 du guide de came 50 présente un bossage 50a (figure 3) à proximité de la première extrémité 51, qui permet de réaliser un certain blocage de la came 43, de sorte que la position déverrouillée est stable.

Comme on le voit mieux aux figures 5 et 7, le pourtour 9 de l'ouverture comporte deux reliefs 59 saillants vers l'axe central Z et le couvercle 12 comporte sur la pièce 15 deux reliefs 60 complémentaires en creux. Les reliefs (59, 60) coopèrent ensemble lorsque le couvercle cylindrique 12 est placé avec une orientation correcte par rapport au pourtour 9 de l'ouverture, de manière à ce que la languette 14 soit positionnée en regard de l'organe verseur 3. Les reliefs (59, 60) assurent une fonction de détrompage et une fonction anti-rotation du couvercle par rapport au pourtour 9 de l'ouverture. Ainsi, le couple exercé sur l'organe de commande 18 n'entraîne pas une rotation du couvercle 12. De plus, la fenêtre 27 du couvercle 12 vient en correspondance avec la fenêtre 25 du pourtour 9, de sorte que l'extrémité 33b du piston 33 du mécanisme de gâchette 30 vient coopérer avec l'ergot 24 du mécanisme de verrouillage 40.

Dans le mode de réalisation représenté, l'organe verseur 3 est séparé de l'ouverture 10 par une cloison 62 du pourtour 9. Comme cela est mieux visible sur la figure 2, la cloison 62 s'étend dans le prolongement du pourtour 9 depuis le sommet de la portion verticale du pourtour, mais sur une hauteur inférieure pour ménager une lumière 63 qui débouche dans l'organe verseur 3 et dans laquelle la languette 14 peut s'étendre vers l'organe verseur 3. Lorsque la languette 14 est en position sortie, c'est-à-dire lorsque la commande de verrouillage est en position verrouillée, celle-ci vient se positionner de façon adjacente avec l'extrémité inférieure de la cloison 62, de sorte que le couvercle 12 est immobilisé sur le boîtier 2 de la bouilloire. La lumière 63 et la languette 14 forment ainsi un deuxième élément de retenue solidaire du boîtier et donc un deuxième verrou mobile par rapport au couvercle, en plus de celui formé par la fenêtre 25 du pourtour 9 et l'ergot 24 du levier 41.

Il est envisageable de ne prévoir que la languette 14 et la lumière 63 pour assurer le verrouillage du couvercle sur le boîtier. Toutefois, la présence de deux points de verrouillage, qui de plus sont diamétralement opposés par rapport à l'axe central Z, assure un maintien particulièrement fiable du couvercle sur le boîtier même si la bouilloire est renversée.

Lorsque l'utilisateur veut verser le liquide en inclinant la bouilloire, il presse avec l'index la gâchette 26 qui forme la commande de versage. Cette commande passe de la position inactive représentée aux figures 2, 4 et 5, à la position activée représentée aux figures 6 et 7. Sous l'action de la gâchette 26, le levier 32 effectue un basculement qui pousse le piston 33 vers l'axe central Z en comprimant le ressort 35. L'extrémité 33b du piston 33 repousse alors l'ergot 24 dans le couvercle en comprimant le ressort 55. L'ergot 24 solidaire du levier pivotant 41 forme une première extrémité du mécanisme de verrouillage 40, dont le déplacement entraîne un déplacement de la deuxième extrémité du mécanisme de verrouillage, à savoir la denture linéaire 49 liée à la languette 14.

Par conséquent, l'actionnement de la gâchette 26 permet de rétracter la languette 14 via le mécanisme de gâchette 30 qui s'étend de la première extrémité du levier basculant 32 à l'extrémité 33b du piston 33, et via le mécanisme de verrouillage 40 qui s'étend de l'ergot 24 à la denture linéaire 49. Ainsi, l'organe verseur 3 est dégagé pour un écoulement libre du liquide.

Les mécanismes de gâchette 30 et de verrouillage 40 sont respectivement logés dans la poignée 4 et le couvercle 12, et par conséquent, sont protégés des salissures. Il apparaît aussi clairement que l'ouverture 10 de la bouilloire est entièrement libre lorsque le couvercle 12 est retiré.

Lorsque l'utilisateur relâche la pression sur la gâchette 26, celle-ci revient en position inactive sous l'action conjuguée du ressort 55 du mécanisme de verrouillage 40 et du ressort 35 du mécanisme de gâchette 30. Il est envisageable de n'utiliser qu'un seul ressort, notamment le ressort 55, pour assurer ce retour. En effet, le couvercle 12 pourrait présenter une portion en biais pour repousser le piston 33 si celui-ci était saillant au moment de l'introduction du couvercle. Toutefois, la prévision d'un moyen élastique pour chacun des mécanismes (30, 40) permet d'assurer leur retour en position initiale indépendamment l'un de l'autre, et limite les jeux dans la chaîne cinématique formée par les deux mécanismes.

La configuration représentée aux figures 6 et 7 correspond à un enfoncement maximum de la gâchette 26. On notera d'un part, que dans cette configuration le piston 33 pénètre dans la fenêtre 27 du couvercle, et d'autre part qu'une portion de la languette 14 s'étend au-delà de la cloison 62. Ces dispositions sont obtenues en ajustant le débattement de la gâchette 26 et l'amplification de ce débattement par le mécanisme de gâchette 30, puis par le mécanisme de verrouillage 40. Elles permettent de conserver deux points de verrouillage du couvercle 12 sur le boîtier.

Dans le mode de réalisation représenté, la coopération entre les deux mécanismes (30, 40) est réalisée par une simple poussée à l'encontre d'une force de rappel élastique. Toutefois, il est envisageable d'assurer une coopération en réalisant une fixation réversible de la deuxième extrémité du premier mécanisme 30 avec la première extrémité du deuxième mécanisme 40, par exemple avec un engagement à frottement doux ou par attraction magnétique. Mais la coopération entre ces extrémités doit être réalisée automatiquement, au moins lorsque le couvercle est verrouillé, et ne doit pas compliquer excessivement l'ouverture de la bouilloire. Toutefois, il est possible de verser le liquide en n'enfonçant que partiellement la gâchette 26. La languette 14 est alors faiblement rétractée, ce qui peut permettre de limiter le débit du liquide versé.

On notera que l'ensemble des éléments du mécanisme de verrouillage 40, à savoir le levier pivotant 41, l'organe pivotant 45 et la denture linéaire 49, est mobile dans un plan qui est parallèle au plan moyen de l'ouverture dont la trace P est visible à la figure 2, ou encore perpendiculaire à l'axe central Z. Cette disposition permet de réaliser un couvercle dont l'encombrement selon la direction normale Z de l'ouverture 10 est particulièrement réduit.

La commande de versage 26 réalisée sous la forme d'une gâchette placée sous la poignée est appréciée de nombreux utilisateurs, mais il est possible de réaliser celle-ci différemment, par exemple sous la forme d'un bouton poussoir monté sur le corps 2a du boîtier, sans sortir du cadre de la présente invention, telle que définie dans les revendications.

## Revendications

1. Appareil électrique de chauffage de liquide comprenant un boîtier (2) qui définit une enceinte destinée à contenir un liquide, une ouverture supérieure (10) de remplissage de l'enceinte, qui est délimitée par un pourtour (9), des moyens électriques de chauffage du liquide, un organe verseur (3) communiquant avec l'enceinte et s'étendant à proximité de l'ouverture, un couvercle (12) adapté pour obturer ladite ouverture, une languette mobile (14) par rapport au couvercle entre une position sortie dans laquelle elle obture l'organe verseur (3) et une position de versage dans laquelle elle est au moins en partie rétractée dans le couvercle, et une commande de versage (26) reliée à la languette par un mécanisme d'actionnement (30, 40) qui est adapté à placer ladite languette (14) soit en position sortie lorsque la commande de versage (26) est inactive, soit en position de versage lorsque la commande de versage (26) est activée, **caractérisé en ce que** le mécanisme d'actionnement (30, 40) reliant la commande de versage (26) à la languette (14) comprend un premier mécanisme (30) agencé dans le boîtier et présentant une première extrémité (32a) reliée à la commande de versage (26) et une deuxième extrémité (33b) mobile à travers une fenêtre (25) du pourtour (9) de l'ouverture, et un deuxième mécanisme (40) agencé dans le couvercle (12) et présentant une première extrémité (24) mobile à travers une fenêtre (27) dudit couvercle (12) et une deuxième extrémité (49) reliée à la languette, la fenêtre (25) du pourtour (9) et la fenêtre (27) du couvercle (12) étant agencées pour venir en correspondance lorsque le couvercle obture l'ouverture, et la deuxième extrémité (33b) du premier mécanisme (30) étant adaptée à coopérer avec la première extrémité (24) du deuxième mécanisme (40), de manière à ce que l'actionnement de la commande de versage (26) soit transmis à la languette (14) via les premier (30) et deuxième (40) mécanismes, ledit deuxième mécanisme (40) étant adapté à créer un déplacement amplifié de la languette (14) par rapport au déplacement de sa première extrémité (24).

2. Appareil selon la revendication 1, dans lequel la deuxième extrémité (33b) du premier mécanisme (30) est montée coulissante selon une direction donnée et vient en butée contre la première extrémité (24) du deuxième mécanisme (40), qui est mobile à l'encontre de la force de rappel d'un organe élastique (55) selon une direction sensiblement colinéaire à ladite direction donnée.

3. Appareil selon la revendication 2, dans lequel la première extrémité (24) du deuxième mécanisme (40) fait saillie à travers la fenêtre (27) du couvercle (12) et pénètre dans la fenêtre (25) du pourtour (9), lorsque la commande de versage (26) est inactive.

4. Appareil selon la revendication 2 ou 3, dans lequel la deuxième extrémité (33b) du premier mécanisme (30) présente une course suffisante pour faire saillie de la fenêtre (25) du pourtour (9) et pénétrer dans la fenêtre (27) du couvercle (12) lorsque la commande de versage est activée.

5. Appareil selon l'une quelconque des revendications précédentes, dans lequel le boîtier (2) présente une lumière (63) qui débouche dans l'organe verseur (3) et dans laquelle s'étend la languette (14) du couvercle lorsque celui-ci obture l'ouverture (10), lesdits premier (30) et deuxième (40) mécanismes étant adaptés pour qu'au moins une partie de ladite languette (14) s'étende dans ladite lumière (63) lorsque la commande de versage (26) est activée.

6. Appareil selon l'une quelconque des revendications précédentes, dans lequel le deuxième mécanisme (40) comprend un levier (41) monté pivotant autour d'un axe (42) sensiblement parallèle à la normale (Z) de l'ouverture (10), et présentant une première extrémité (24) formant la première extrémité dudit mécanisme (40) et une deuxième extrémité munie d'une denture (44), ladite première extrémité (24) étant sollicitée radialement vers l'extérieur par un organe élastique (55).

7. Appareil selon la revendication 6, dans lequel le deuxième mécanisme (40) comprend un organe pivotant (45) muni d'un premier secteur denté (47) qui engrène une denture linéaire (49) reliée à la languette (14) et un deuxième secteur denté (48) qui engrène la denture (44) de la deuxième extrémité du levier pivotant (41), ledit premier secteur denté (47) présentant un rayon supérieur au rayon dudit deuxième secteur denté (48).

8. Appareil selon l'une quelconque des revendications précédentes, dans lequel le premier mécanisme (30) comprend un levier (32) monté basculant par rapport au boîtier autour d'un axe (31), et présentant une première extrémité (32a) liée à la commande de versage (26) et une deuxième extrémité (32b) en appui contre une première extrémité d'un piston (33), ledit piston étant monté coulissant dans ledit boîtier à l'encontre d'un organe élastique (35) et présentant une deuxième extrémité (33b) qui forme la deuxième extrémité dudit premier mécanisme (30).

9. Appareil selon l'une quelconque des revendications précédentes, dans lequel le boîtier (2) comprend une poignée (4) située du coté opposé à l'organe verseur (3), et dans lequel la commande de versage (26) se présente sous la forme d'une gâchette agencée sous ladite poignée (4).

## Claims

1. Electrical appliance for heating liquid, comprising a housing (2) that defines a chamber intended to contain a liquid, a top opening (10) for filling the chamber, which is delimited by a periphery (9), electrical means for heating the liquid, a pouring member (3) communicating with the chamber and extending close to the opening, a lid (12) adapted to close the said opening, a tongue (14) able to move with respect to the lid between an emerged position in which it closes off the pouring member (3) and a pouring position in which it is at least partly retracted into the lid, and a pouring control (26) connected to the tongue by an actuation mechanism (30, 40) that is adapted to place the said tongue (14) either in the emerged position when the pouring control (26) is inactive or in the pouring position when the pouring control (26) is activated, **characterised in that** the actuation mechanism (30, 40) connecting the pouring control (26) to the tongue (14) comprises a first mechanism (30) arranged in the housing and having a first end (32a) connected to the pouring control (26) and a second end (33b) able to move through a window (25) in the periphery (9) of the opening, and a second mechanism (40) arranged in the lid (12) and having a first end (24) able to move through a window (27) in the said lid (12) and a second end (49) connected to the tongue, the window (25) in the periphery (9) and the window (27) in the lid (12) being arranged so as to come to correspond when the lid closes off the opening, and the second end (33b) of the first mechanism (30) being adapted to cooperate with the first end (24) of the second mechanism (40), so that the actuation of the pouring control (26) is transmitted to the tongue (14) via the first (30) and second (40) mechanisms, the said second mechanism (40) being adapted to create an amplified movement of the tongue (14) compared with the movement of its first end (24).

2. Appliance according to claim 1, in which the second end (33b) of the first mechanism (30) is mounted so as to slide in a given direction and comes into abutment against the first end (24) of the second mechanism (40), which is able to move counter to the return force of an elastic member (55) in a direction substantially collinear with the said given direction.

3. Appliance according to claim 2, in which the first end (24) of the second mechanism (40) projects through the window (27) of the lid (12) and enters the window (25) of the periphery (9), when the pouring control (26) is inactive.

4. Appliance according to claim 2 or 3, in which the second end (33b) of the first mechanism (30) has sufficient travel to project from the window (25) in the periphery (9) and enter the window (27) in the lid (12) when the pouring control is activated.

5. Appliance according to any one of the preceding claims, in which the housing (2) has an aperture (63) which emerges in the pouring member (3) and in which the tongue (14) of the lid extends when the latter is closing off the opening (10), the said first (30) and second (40) mechanisms being adapted so that at least part of the said tongue (14) extends in the said aperture (63) when the pouring control (26) is activated.

6. Appliance according to any one of the preceding claims, in which the second mechanism (40) comprises a lever (41) mounted so as to pivot about a spindle (42) substantially parallel to the normal (Z) to the opening (10), and having a first end (24) forming the first end of the said mechanism (40) and a second end provided with teeth (44), the said first end (24) being urged radially outwards by an elastic member (55).

7. Appliance according to claim 6, in which the second mechanism (40) comprises a pivoting member (45) provided with a first toothed sector (47) that meshes with a linear set of teeth (49) connected to the tongue (14) and a second toothed sector (48) that meshes with the teeth (44) on the second end of the pivoting lever (41), the said first toothed sector (47) having a radius greater than the radius of the said second toothed sector (48).

8. Appliance according to any one of the preceding claims, in which the first mechanism (30) comprises a lever (32) mounted so as to tilt with respect to the housing about a spindle (31), and having a first end (32a) connected to the pouring control (26) and a second end (32b) in abutment against a first end of a piston (33), the said piston being mounted so as to slide in the said housing counter to an elastic member (35) and having a second end (33b) that forms the second end of the said first mechanism (30).

9. Appliance according to any one of the preceding claims, in which the housing (2) comprises a handle (4) situated on the side opposite to the pouring member (3), and in which the pouring control (26) is in the form of a trigger arranged under the said handle (4).

## Patentansprüche

1. Elektrisches Gerät zum Erwärmen von Flüssigkeit mit einem Gehäuse (2), das einen Raum definiert, der zum Aufnehmen einer Flüssigkeit bestimmt ist, mit einer oberen Öffnung (10) zum Füllen des Raums, die durch einen Umfang (9) begrenzt ist, elektrischen Mitteln zum Erwärmen der Flüssigkeit, einem Ausgießelement (3), das mit dem Raum zusammenwirkt und sich in der Nähe der Öffnung erstreckt, einem Deckel (12), der zum Verschließen der Öffnung geeignet ist, einer Zunge (14), die bezüglich des Deckels zwischen einer Ausschubstellung, in der sie das Ausgießelement (3) verschließt, und einer Ausgießstellung, in der sie mindestens teilweise in den Deckel zurückgezogen ist, beweglich ist und mit einer Ausgießsteuerung (26), die mit der Zunge durch einen Betätigungsmechanismus (30, 40) verbunden ist, der dafür eingerichtet ist, die Zunge (14) entweder in die herausgeschobene Stellung zu bringen, wenn die Ausgießsteuerung (26) inaktiv ist, oder in die Ausgießstellung zu bringen, wenn die Ausgießsteuerung (26) aktiviert ist, **dadurch gekennzeichnet, daß** der Betätigungsmechanismus (30, 40), der die Ausgießsteuerung (26) mit der Zunge (14) verbindet, einen ersten Mechanismus (30) aufweist, der im Gehäuse ausgebildet ist und ein erstes Ende (32a) aufweist, das mit der Ausgießsteuerung (26) verbunden ist, und ein zweites Ende (33b) aufweist, das durch ein Fenster (25) des Umfangs (9) der Öffnung beweglich ist, und einen zweiten Mechanismus (40) aufweist, der im Deckel (12) angeordnet ist und ein erstes Ende (24) aufweist, das durch ein Fenster (27) des Deckels (12) beweglich ist, und ein zweites Ende (19) aufweist, das mit der Zunge verbunden ist, wobei das Fenster (25) des Umfangs (9) und das Fenster (27) des Deckels (12) so ausgebildet sind, daß sie in Entsprechung zueinander kommen, wenn der Deckel die Öffnung verschließt, und das zweite Ende (33b) des Mechanismus (30) so ausgebildet ist, daß es mit dem ersten Ende (24) des zweiten Mechanismus (40) zusammenwirkt, so daß die Betätigung der Ausgießsteuerung (26) auf die Zunge (14) über den ersten Mechanismus (30) und zweiten Mechanismus (40) übertragen wird, wobei der zweite Mechanismus (40) so ausgebildet ist, daß eine verstärkte Verschiebung der Zunge (14) bezüglich der Verschiebung seines ersten Endes (24) erzeugt wird.

2. Gerät nach Anspruch 1, worin das zweite Ende (33b) des ersten Mechanismus (30) verschiebbar in einer gegebenen Richtung montiert ist und in Anschlag gegen das erste Ende (24) des zweiten Mechanismus (40) gelangt, der gegen die Rückstellkraft eines elastischen Elementes (55) in einer zu der gegebenen Richtung im wesentlichen kolinearen Richtung beweglich ist.

3. Gerät nach Anspruch 2, worin das erste Ende (24) des zweiten Mechanismus (40) durch das Fenster (27) des Deckels (12) vorspringt und in das Fenster (25) des Umfangs (9) eindringt, wenn die Ausgießsteuerung (26) inaktiv ist.

4. Gerät nach Anspruch 2 oder 3, worin das zweite Ende (33b) des ersten Mechanismus (30) eine genügende Laufstrecke aufweist, um aus dem Fenster (25) des Umfangs (9) vorzuspringen und in das Fenster (27) des Deckels (12) einzudringen, wenn die Ausgießsteuerung aktiviert ist.

5. Gerät nach einem der vorangehenden Ansprüche, worin das Gehäuse (2) einen Schlitz (63) aufweist, der im Ausgießelement (3) mündet und in den sich die Zunge (14) des Deckels erstreckt, wenn dieser die Öffnung (10) verschließt, wobei der erste Mechanismus (30) und zweite Mechanismus (40) dafür eingerichtet sind, daß mindestens ein Teil der Zunge (14) sich in den Schlitz (13) erstreckt, wenn die Ausgießsteuerung (26) aktiviert ist.

6. Gerät nach einem der vorangehenden Ansprüche, worin der zweite Mechanismus (14) einen Hebel (41) aufweist, der um eine Achse (42) schwenkbar montiert ist, die im wesentlichen parallel zur Normale (Z) der Öffnung (10) ist und ein erstes Ende (24) aufweist, das das erste Ende des Mechanismus (40) bildet, und ein zweites Ende aufweist, das mit einer Zahnung (44) versehen ist, wobei das erste Ende (24) durch ein elastisches Element (55) radial nach außen beaufschlagt ist.

7. Gerät nach Anspruch 6, worin der zweite Mechanismus (40) ein Schwenkelement (45) aufweist, das mit einem ersten Zahnbogen (47) versehen ist, der mit einer geraden Zahnung (49) kämmt, die mit der Zunge (14) verbunden ist, und einen zweiten Zahnbogen (48) aufweist, der mit der Zahnung (44) des zweiten Endes des Schwenkhebels (41) kämmt, wobei der erste Zahnbogen (47) einen größeren Radius als der Radius des zweiten Zahnbogens (48) hat.

8. Gerät nach einem der vorangehenden Ansprüche, worin der erste Mechanismus (30) einen Hebel (32) aufweist, der bezüglich des Gehäuses um eine Achse (31) schwenkbar montiert ist und ein erstes Ende (32a) aufweist, das mit der Ausgießsteuerung (26) verbunden ist, und ein zweites Ende (32b) aufweist, das gegen ein erstes Ende eines Kolbens (33) drückt, wobei der Kolben im Gehäuse gegen ein elastisches Element (35) verschiebbar montiert ist und ein zweites Ende (33b) aufweist, das das zweite Ende des ersten Mechanismus (30) bildet.

9. Gerät nach einem der vorangehenden Ansprüche, worin das Gehäuse (2) einen Handgriff (4) aufweist, der auf der dem Ausgießelement (3) gegenüberliegenden Seite angeordnet ist und in dem die Ausgießsteuerung (26) in Form eines unter dem Handgriff (4) angeordneten Drückers vorhanden ist.
